Europäisches Patentamt

European Patent Office

Office européen des brevets

(19)

(11) Veröffentlichungsnummer: **0 163 299**
**B1**

(12) **EUROPÄISCHE PATENTSCHRIFT**

(45) Veröffentlichungstag der Patentschrift:
30.03.88

(51) Int. Cl.⁴: **H 02 M 3/335,** H 03 K 17/687

(21) Anmeldenummer: **85106615.9**

(22) Anmeldetag: **29.05.85**

(54) Umrichterschaltung mit einem Übertrager.

(30) Priorität: **30.05.84 DE 3420354**

(43) Veröffentlichungstag der Anmeldung:
**04.12.85 Patentblatt 85/49**

(45) Bekanntmachung des Hinweises auf die Patenterteilung:
**30.03.88 Patentblatt 88/13**

(84) Benannte Vertragsstaaten:
**AT BE CH DE FR GB IT LI NL SE**

(56) Entgegenhaltungen:
**EP - A - 0 049 361**
**EP - A - 0 082 422**
**DE - A - 2 914 909**

(73) Patentinhaber: **Siemens Aktiengesellschaft Berlin und München, Wittelsbacherplatz 2, D-8000 München 2 (DE)**

(72) Erfinder: **Kupka, Detlef, Dipl.-Ing. (FH), Einsteinstrasse 12, D-8033 Martinsried (DE)**

ACTORUM AG

## Beschreibung

Die Erfindung bezieht sich auf eine Umrichterschaltung mit einem Übertrager, bei dem eine Primärwicklung über einen elektronischen Schalter an einen Eingang für eine Speisegleichspannung geführt ist und bei dem wenigstens eine Sekundärwicklung über einen Gleichrichter an einen Ausgang geführt ist, wobei ein Steuereingang des elektronischen Schalters über eine Ansteuerschaltung an eine Steuereinrichtung angeschlossen ist, die, insbesondere impulsbreitengesteuerte, Steuerimpulse abgibt, wobei die Steuerimpulse Einschaltpotential und die Impulspausen Sperrpotential haben. Die Steuereinrichtung kann ein Taktgeber oder ein Taktgeber mit Regler sein, der für Taktimpulse bzw. Steuerimpulse hinsichtlich ihrer Dauer moduliert. Die Umrichterschaltung ist insbesondere ein Sperrwandler.

Ein derartiger Sperrwandler ist bereits aus dem Buch von Hans Gumhalter: «Stromversorgungssysteme der Kommunikationstechnik», Teil 1, Grundlagen, 1983, Berlin; München: Siemens AG, Seiten 215 und 219 bekannt. Der bekannte Sperrwandler enthält als elektronischen Schalter einen bipolaren Transistor, der durch eine Anordnung zur Regelung und Steuerung angesteuert wird.

Ersetzt man bei einem derartigen Sperrwandler den bipolaren Transistor durch einen Leistungs-MOS-Feldeffekttransistor, so ergibt sich eine praktisch leistungslose Ansteuerung. Ausserdem werden durch die hohe Schaltgeschwindigkeit besonders geringe Umschaltverluste erzielt.

Allerdings haben Übertrager von Stromversorgungsgeräten nach dem Sperrwandlerprinzip, und zwar wickeltechnisch bedingt, Streuinduktivität und Wickelkapazität. Wie Untersuchungen im Rahmen der Erfindung gezeigt haben, kann auch bei einem Wicklungsaufbau mit optimal gekoppelten Wicklungen die Schwingfrequenz bei etlichen MHz liegen, so dass bei einer Verwendung sehr schneller elektronischer Schalter Schwingungen angeregt werden können, die den oder die auf der Sekundärseite des Übertragers liegenden Gleichrichter spannungsmässig zusätzlich belasten und eine hochfrequente Störquelle darstellen.

Aus der EP-A-82 422 ist bereits eine Beschaltung für einen eine induktive Last schaltenden Leistungs-Feldeffekttransistor bekannt. Dieser Leistungs-Feldeffekttransistor wird mit Hilfe eines RC-Gliedes verzögert eingeschaltet, um störende Spannungsspitzen zu vermeiden. Das RC-Glied enthält einen Kondensator, der zwischen dem Drain und dem Gate des Feldeffekttransistors angeordnet ist und daher für eine vergleichsweise grosse Spannung ausgelegt sein muss. Zusätzlich zu der gewünschten Einschaltverzögerung ergibt sich zwangsläufig auch für den Ausschaltvorgang eine entsprechende Verzögerung.

Aus der EP-A-49 361 ist bereits ein einen Transformator enthaltender Sperrwandler bekannt, bei dem störende Schwingungen bei schnell schaltenden Transistoren vermieden werden sollen. Der bekannte Sperrwandler sieht zu diesem Zweck einen Dämpfungswiderstand vor, der an einen Sekundärkreis des Transformators angeschlossen ist. Eine in Serie zum Dämpfungswiderstand angeordnete Diode bewirkt, dass der Dämpfungswiderstand nur während der Einschaltphase des Schalttransistors wirksam ist. Während der Einschaltphase des Schalttransistors wird allerdings im Dämpfungswiderstand eine vergleichsweise grosse Leistung verbraucht.

Aufgabe der Erfindung ist es, die Umrichterschaltung derart auszubilden, dass bei Verwendung eines schnellen elektronischen Schalters die Einschaltzeit definiert verlangsamt wird, um hochfrequente Schwingungen wirksam zu vermindern.

Man kann zur Lösung dieser Aufgabe versuchen, Leistungs-MOS-Transistoren zu verwenden und die Schaltzeiten dieser Transistoren durch Vergrössern der Gate-Kapazität bzw. des Gate-Widerstandes zu beeinflussen. Eine Erkenntnis im Rahmen der Erfindung besteht jedoch darin, dass eine derartige Beeinflussung der Schaltzeiten nur in einem unwesentlichen Ausmass möglich ist.

Ausgehend von dieser Erkenntnis wird die Umrichterschaltung zur Lösung der gestellten Aufgabe derart ausgebildet, dass der elektrische Schalter ein mit seiner Source-Drain-Strecke in Serie zur Primärwicklung angeordneter Leistungs-MOS-Transistor ist, dessen Gate-Elektrode über einen Gate-Vorwiderstand an die Ansteuerschaltung angeschlossen ist und dass die Ansteuerschaltung ein dem Gate-Vorwiderstand vorgeschaltetes RC-Glied mit einem in Serie zum Gate-Vorwiderstand angeordneten Widerstand und mit einem Kondensator enthält, der parallel zur Serienschaltung aus Gate-Source-Strecke des MOS-Transistors und Gate-Vorwiderstand liegt und dass parallel zum Kondensator ein derart steuerbarer Entladestromkreis angeordnet ist, dass der Entladestromkreis bei Einschaltpotential abgebender Ansteuerschaltung ausgeschaltet und bei Sperrpotential abgebender Ansteuerschaltung eingeschaltet ist.

Durch diese Massnahmen ergibt sich der Vorteil, dass bei vergleichsweise geringen grundsätzlichen Einschaltverlusten im Feldeffekttransistor die Spannungsbelastung der Gleichrichter wesentlich herabgesetzt ist und somit Gleichrichter mit angemessener Sperrspannung verwendet werden können. Ferner spart man Leistungswiderstände und Kondensatoren, mit denen die Schwingungen sonst gedämpft werden könnten.

In Weiterbildung der Erfindung wird die Umrichterschaltung derart ausgebildet, dass der Entladestromkreis durch die Emitter-Kollektor-Strecke eines bipolaren Transistors gebildet ist. Dabei ergibt sich, dass der Anstieg der Gate-Spannung während des Einschaltvorganges durch die Zeitkonstante des RC-Gliedes definiert wird, der Abfall der Gate-Spannung während des Ausschaltvorganges dagegen fast unverzögert erfolgt, wodurch die Ausschaltverluste konstant bleiben.

In weiterer Ausgestaltung der Erfindung ist die Zeitkonstante des RC-Gliedes nur so gross bemessen, dass ein vorgegebener Grenzwert der Sperrspannung des Gleichrichters eingehalten wird. Durch diese Massnahmen ergibt sich der Vorteil, dass die in Hinsicht auf eine niedrige Verlustleistung an sich vorteilhafte kurze Schaltzeit der Leistungs-MOS-Transistoren nur in einem Ausmass verringert wird, das zur Lösung der gestellten Aufgabe erforderlich ist.

Zweckmässigerweise wird die Umrichterschaltung derart ausgebildet, dass der Gate-Vorwiderstand einerseits über den Widerstand und die dazu in Serie liegende Kollektor-Emitter-Strecke eines ersten Transistors an eine Quelle für das Einschaltpotential und andererseits über die Emitter-Kollektor-Strecke eines zweiten Transistors an eine Quelle für das Sperrpotential geführt ist und dass der parallel zum Kondensator des RC-Gliedes angeordnete Entladestromkreis durch die Emitter-Kollektor-Strecke des zweiten Transistors gebildet ist und dass der erste und der zweite Transistor der Ansteuerschaltung durch die Steuereinrichtung derart steuerbar sind, dass jeweils der eine Transistor leitend und der andere gesperrt ist.

Hat der Übertrager mehrere Ausgangswicklungen, so fällt der erfindungsgemäss erzielte Vorteil besonders ins Gewicht, da die verringerten Anforderungen an die Sperrspannung der Gleichrichter für mehrere Gleichrichter gelten, wegen der grösseren Zahl von Übertragerwicklungen die Streuinduktivitäten schwieriger klein zu halten sind und Schaltmittel zur Dämpfung von Schwingungen an den Ausgängen der Umrichterschaltung mehrfach vorgesehen werden müssten, was mit einem besonders grossen Aufwand und Leistungsverlust verbunden wäre.

Verwendet man in Weiterbildung der Erfindung die Umrichterschaltung in einer Einrichtung zur Fernspeisung von Nachrichten-Übertragungsstrecken, so werden wegen der grossen Potentialdifferenz zwischen Eingang und Ausgang an die Spannungsfestigkeit des Übertragers besonders hohe Anforderungen gestellt. In vorteilhafter Weise werden die Auswirkungen der hieraus resultierenden unvermeidlichen Streuinduktivitäten auf ein Mass reduziert, das praktisch nicht mehr ins Gewicht fällt.

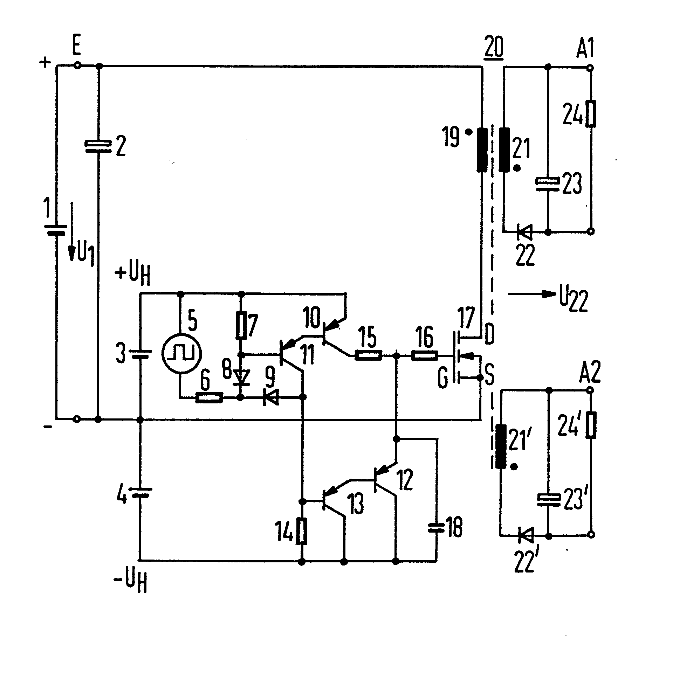

Die Erfindung wird anhand des in der Figur gezeigten Ausführungsbeispieles näher erläutert.

Die Figur zeigt eine als Sperrwandler ausgebildete Umrichterschaltung mit Leistungs-MOS-Transistor.

Bei dem in der Figur gezeigten Sperrwandler ist die Gleichspannungsquelle 1, an der die Eingangsgleichspannung U1 anliegt, über die Source-Drain-Strecke des Leistungs-MOS-Feldeffekttransistors 17 an die Primärwicklung 19 des Übertragers 20 geführt. Der Minuspol der Spannungsquelle 1 bildet das Bezugspotential des Eingangskreises und ist mit dem Source-Anschluss des Feldeffekttransistors 17 verbunden. Ausserdem sind der Minuspol der Hilfsspannungsquelle 3 und der Pluspol der Hilfsspannungsquelle 4 an den Minuspol der Gleichspannungsquelle 1 angeschlossen.

An der Sekundärwicklung 21 des Übertragers 20 liegt eine Serienschaltung aus dem Gleichrichter 22 und dem Kondensator 23. Parallel zum Kondensator 23 liegt der Ausgang A1, an den der Lastwiderstand 24 angeschlossen ist.

An der weiteren Sekundärwicklung 21' liegt ein gleichartig ausgebildeter Ausgangskreis für eine weitere Ausgangsspannung. Die Serienschaltung aus dem Gleichrichter 22' und dem Kondensator 23' liegt an der Sekundärwicklung 21'. Parallel zum Kondensator 23' liegt der zweite Ausgang A2, an den der weitere Lastwiderstand 24' angeschlossen ist.

Werden weitere Ausgangsspannungen gewünscht, so können in gleicher Weise beschaltete weitere Sekundärwicklungen vorgesehen sein.

Dem Gate des Feldeffekttransistors 17 ist der Gate-Vorwiderstand 16 vorgeschaltet. Der dem Gate abgewandte Anschluss des Vorwiderstandes 16 liegt am Verbindungspunkt des Widerstandes 15 mit dem Kondensator 18. Der Widerstand 15 und der Kondensator 18 sind zueinander in Serie geschaltet und bilden ein RC-Glied, das über die Emitter-Kollektor-Strecke des Transistors 10 an die Serienschaltung der beiden Hilfsspannungsquellen 3 und 4 angeschlossen ist.

Parallel zum Kondensator liegt die Emitter-Kollektor-Strecke des bipolaren Transistors 12. Parallel zur Basis-Kollektor-Strecke des Transistors 12 liegt die Emitter-Kollektor-Strecke des Transistors 13. Die Basis des Transistors 13 ist über den Widerstand 14 an den Minuspol der Hilfsspannungsquelle 4 bzw. an das Potential $-U_H$ und über die Kollektor-Emitter-Strecke des Transistors 11 an die Basis des Transistors 10 geführt. Die Basis des Transistors 11 ist über den Widerstand 7 an den Pluspol der Hilfsspannungsquelle 3 bzw. an das Potential $+U_H$ geführt. Die Basis des Transistors 11 ist ferner über die Diode 8 an einen Schaltungspunkt geführt, der einerseits über die Diode 9 an den Kollektor des Transistors 11 und andererseits über den Widerstand 6 und den Ausgang des Reglers 5 an das Potential $+U_H$ geführt ist.

Der Übertrager 20 hat eine Streuinduktivität und eine Wickelkapazität. Auch bei einem Wicklungsaufbau mit optimal gekoppelten Wicklungen kann die Schwingfrequenz bei etlichen MHz liegen. Wird ein derartiger Übertrager primär mit einem sehr schnellen Schalter an eine Spannungsquelle geschaltet, so fliesst entsprechend dem Wellenwiderstand des aus Streuinduktivität L und Wicklungskapazität $C_w$ bestehenden Schwingkreises ein Strom und regt den Schwingkreis an. Die Spannung schwingt dabei auf den doppelten Wert der Spannungsquelle und klingt dann periodisch, durch die Eisenverluste des Übertragers 20 gedämpft, ab. Dieser Schwingungsvorgang belastet den oder die Gleichrichter auf der Sekundärseite spannungsmässig und bildet eine hochfrequente Störquelle.

Der in der Figur gezeigte Sperrwandler enthält ebenfalls einen – jedenfalls für sich allein betrachtet – sehr schnellen elektronischen Schalter, nämlich den Leistungs-MOS-Feldeffekttransistor 17. Dem Gate des Feldeffekttransistors 17 ist jedoch eine in besonderer Weise ausgebildete Ansteuerschaltung vorgeschaltet. Diese Ansteuerschaltung gewährleistet, dass die effektive Spannungsbelastung der Gleichrichter 22 und 22' auf den Nennwert herabgesetzt wird und somit Gleichrichter mit angemessener Sperrspannung verwendet werden können.

Kommt vom Regler 5, der einen Taktgeber und einen Impulsbreitenmodulator enthält, das Einschaltsignal für den Feldeffekttransistor 17, so werden die Transistoren 11 und 10 leitend. Durch den Spannungsabfall am Widerstand 14 werden die Transistoren 13 und 12 gesperrt. Über den Widerstand 15 wird der Kondensator 18 verzögert von der Spannung $-U_H$ auf die Spannung $+U_H$ aufgeladen. Dadurch wird die Gate-Schwellenspannung des Leistungs-MOS-Feldeffekttransistors 17 langsam durchlaufen, was zu einem definiert verzögerten Einschalten führt. Da der Leistungs-MOS-Feldeffekttransistor 17 dabei Spannung aufnimmt, wird der Spannungsanstieg du/dt an der Primärwicklung 19 so verlangsamt, dass der Schwingkreis praktisch nicht angeregt wird.

Nach dem Ausschaltsignal, gegeben durch die Abstiegsflanke des vom Regler 5 abgegebenen Einschaltimpulses, werden die Transistoren 11 und 10 gesperrt und die Transistoren 13 und 12 leitend. Über den Transistor 12 wird der Kondensator 18 nahezu unverzögert auf die Spannung $-U_H$ entladen, wodurch der Leistungs-MOS-Feldeffekttransistor unverzögert sperrt. Auch für den Fall, dass in Serie zur Emitter-Kollektor-Strecke des Transistors 12 ein Schutzwiderstand angeordnet wird, findet die Sperrung des Feldeffekttransistors 17 praktisch unverzögert statt.

Eine gute Kopplung der Übertragerwicklung wird dadurch erreicht, dass Primär- und Sekundärwicklung bzw. Primär- und Sekundärwicklungen möglichst oft ineinander geschachtelt werden. Werden die Primärwicklung und die Sekundärwicklung des Übertragers mehrmals ineinandergeschachtelt angeordnet, so wird eine besonders gute Kopplung der Übertragerwicklungen erreicht. Um vorgegebene Anforderungen hinsichtlich der Dioden-Sperrspannung und/oder Störungssicherheit zu erfüllen, braucht der Anstieg der Gate-Spannung des Leistungs-MOS-Transistors in diesem Fall nur in einem besonders geringen Masse verringert zu werden.

Man kann anstelle der beiden Hilfsspannungsquellen 3 und 4 nur eine einzige Hilfsspannungsquelle vorsehen. Um mit dieser einen Hilfsspannungsquelle auszukommen, wird die Hilfsspannungsquelle 4 durch eine elektrische Verbindung ersetzt. Der Schaltungsaufbau als solcher bleibt in diesem Fall im übrigen unverändert.

Wird ein L–C Schwingkreis durch einen unendlich schnellen Schalter an eine Gleichspannungsquelle geschaltet, fliesst, begrenzt durch den Wellenwiderstand $|Z| = \sqrt{\frac{L}{C}}$, ein Strom. Die Spannung am Kondensator schwingt auf den doppelten Wert der Spannungsquelle und klingt je nach Dämpfungsgrad ab.

Die einfachste Methode einen solchen Schwingkreis aperiodisch zu bedämpfen ist, einen Serienwiderstand $R_c = 2 \cdot |Z|$ in den Kreis einzuführen, an dem die Energie des Schwingkreises vernichtet wird. Dies ist aber bei Übertragern nicht möglich. Man kann aber R–C-Dämpfungsglieder zur Wicklung schalten. Dabei muss die Kapazität C etwa 10

$\times$ $C_W$, d. h. gleich dem Zehnfachen der Wicklungskapazität gewählt werden, wodurch der Wellenwiderstand etwa um den Faktor 3 verkleinert und der im Schwingkreis fliessende Strom entsprechend vergrössert wird. Dies führt zu etwa dreimal grösseren Verlusten in dem dann benötigten Dämpfungswiderstand R.

Wird ein Schwingkreis mit der Periodendauer T an eine Gleichspannungsquelle geschaltet, deren Spannung nach einer e-Funktion mit einer Zeitkonstante $\gamma > 1/4 \cdot T$ von O bis U ansteigt, wird der in den Schwingkreis fliessende Strom derart begrenzt, dass die Spannung am Kondensator nur noch unwesentlich überschwingt. Das gleiche Ergebnis wird erreicht, wenn der Schalter definiert langsam einschaltet. Die dabei auftretenden Schaltverluste sind so gering wie bei einem Serienwiderstand $R_d$, also nur etwa 1/3 der Leistung eines externen Widerstandes R.

Bei einer bevorzugten Ausführungsform dient der Sperrwandler als Speisestromquelle in einem Fernspeisegerät zu Fernspeisung von Nachrichten-Übertragungsstrecken. Bei einer bevorzugtenm Ausführungsform wird für den Übertrager eine Prüfwechselspannung in der Grösse von 4kV gefordert. Der Übertrager hat in diesem Fall sechs Sekundär- und sieben Primärwicklungen. Fast der halbe Wickelraum geht für die Isolation verloren. Die Resonanzfrequenz des Übertragers liegt bei etwa 5 MHz.

Bei einer bevorzugten Ausführungsform einer Umrichterschaltung nach der Figur wurde die Einschaltzeit von 200 ns auf 400 ns erhöht. Dadurch werden die Schwingungen auf einen vernachlässigbaren Wert gedämpft. Die Einschaltzeit und damit die Einschaltverluste sind nach wie vor wesentlich geringer als bei einem bipolaren Transistor, dessen Einschaltzeit z. B. 1,5 µ sec beträgt.

**Patentansprüche**

1. Umrichterschaltung mit einem Übertrager (20), bei dem eine Primärwicklung (19) über einen elektronischen Schalter an einen Eingang (E) für eine Speisegleichspannung (U1) geführt ist und bei dem wenigstens eine Sekundärwicklung (21, 21') über einen Gleichrichter (22, 22') an einen Ausgang (A1, A2) geführt ist, wobei ein Steuereingang des elektronischen Schalters über eine Ansteuerschaltung an eine Steuereinrichtung angeschlossen ist, die, insbesondere impulsbreitengesteuerte, Steuerimpulse abgibt, wobei die Steuerimpulse Einschaltpotential ($+U_H$) und die Impulspausen Sperrpotential ($-U_H$) haben, dadurch gekennzeichnet, dass der elektronische Schalter ein mit seiner Source-Drain-Strecke in Serie zur Primärwicklung (19) angeordneter Leistungs-MOS-Transistor (17) ist, dessen Gate-Elektrode (G) über einen Gate-Vorwiderstand (16) an die Ansteuerschaltung angeschlossen ist und dass die Ansteuerschaltung ein dem Gate-Vorwiderstand (16) vorgeschaltetes RC-Glied mit einem in Serie zum Gate-Vorwiderstand (16) angeordneten Widerstand (15) und mit einem Kondensator (18) enthält, der parallel zur Serienschaltung aus Gate-Source-Strecke des MOS-Transistors (17) und Gate-Vorwiderstand (16) liegt und dass parallel zum Kondensator (18) ein derart steuerbarer Entladestromkreis angeordnet ist, dass der Entladestromkreis bei Einschaltpotential (+$U_H$) abgebender Ansteuerschaltung ausgeschaltet und bei Sperrpotential (−$U_H$) abgebender Ansteuerschaltung eingeschaltet ist.

2. Umrichterschaltung nach Anspruch 1, dadurch gekennzeichnet, dass der Entladestromkreis durch die Emitter-Kollektor-Strecke eines bipolaren Transistors, insbesondere mit einem in Serie geschalteten Schutzwiderstand, gebildet ist.

3. Umrichterschaltung nach Anspruch 1 oder 2, dadurch gekennzeichnet, dass die Zeitkonstante des RC-Gliedes (15, 18) nur so gross bemessen ist, dass ein vorgegebener Grenzwert der Sperrspannung des Gleichrichters (22, 22') eingehalten wird.

4. Umrichterschaltung nach einem der Ansprüche 1 bis 3, dadurch gekennzeichnet, dass der Gate-Vorwiderstand (16) einerseits über den Widerstand (15) und die dazu in Serie liegende Kollektor-Emitter-Strecke eines ersten Transistors (10) an eine Quelle (3) für das Einschaltpotential (+$U_H$) und andererseits über die Emitter-Kollektor-Strecke eines zweiten Transistors (12) an eine Quelle für das Sperrpotential (−$U_H$) geführt ist und dass der parallel zum Kondensator (18) des RC-Gliedes (15, 18) angeordnete Entladestromkreis durch die Emitter-Kollektor-Strecke des zweiten Transistors (12) gebildet ist und dass der erste und der zweite Transistor (10, 12) der Ansteuerschaltung durch die Steuereinrichtung derart steuerbar sind, dass jeweils der eine Transistor (10) leitend und der andere (12) gesperrt ist.

5. Umrichterschaltung nach einem der Ansprüche 1 bis 4, dadurch gekennzeichnet, dass der Übertrager (20) mehrere Ausgangswicklungen (21, 21') hat.

6. Verwendung der Umrichterschaltung nach einem der Ansprüche 1 bis 5, als Sperrwandler in einer Einrichtung zur Fernspeisung von Nachrichten-Übertragungsstrecken.

## Claims

1. A converter circuit with a transformer (20), wherein a primary winding (19) leads via an electronic switch to an input (E) for a supply d.c. voltage (U1) and wherein at least one secondary winding (21) leads via a rectifier (22, 22') to an output (A1, A2), a control input of the electronic switch being connected via a drive circuit to a control device which emits pulse-breadth controlled control pulses having a turn-on potential (+$U_H$) with pulse pauses having a blocking potential (−$U_H$), characterised in that the electronic switch is a power-MOS-transistor (17) whose source-drain path is arranged in series with the primary winding (19), and whose gate electrode (G) is connected via a series gate resistor (16) to the drive circuit, and that the drive circuit contains an RC-component which precedes the series gate resistor (16) and comprises a resistor (15), arranged in series with the series gate resistor (16), and a capacitor (18) arranged in parallel to the series arrangement of the gate-source path of the MOS-transistor (17) and the series gate resistor (16), and that the capacitor (18) is arranged in parallel to a discharging circuit which can be controlled such that the discharging circuit is switched off when the drive circuit emits turn-on potential (+$U_H$) and is switched on when the drive circuit emits blocking potential (−$U_H$).

2. A converter circuit as claimed in claim 1, characterised in that the discharging circuits is formed by the emitter-collector path of a bipolar transistor, in particular a series-connected protective resistor.

3. A converter circuit as claimed in claim 1 or claim 2, characterised in that the value of the time constant of the RC-component (15, 18) is only sufficient to ensure that a predetermined limit value of the blocking voltage of the rectifier (22, 22') is adhered to.

4. A converter circuit as claimed in one of claims 1 to 3, characterised in that the series gate resistor (16) leads via the resistor (15) and the series-connected collector-emitter path of a first transistor (10) to a source (3) for the turn-on potential (+$U_H$) and via the emitter-collector path of a second transistor (12) to a source for the blocking potential (−$U_H$), that the discharging circuit arranged in parallel to the capacitor of the RC-component (15, 18) is formed by the emitter-collector path of the second transistor (12), and that the first and second transistors (10, 12) of the drive circuit can be controlled by the control device such that in each case the first transistor (10) is conductive and the other (12) is blocked.

5. A converter circuit as claimed in one of claims 1 to 4, characterised in that the transformer (20) has a plurality of output windings (21).

6. Use of the converter circuit as claimed in one of claims 1 to 5 as a blocking converter in a device for the remote supply of communications transmission links.

## Revendications

1. Circuit convertisseur avec un transformateur (20) dont un enroulement primaire (19) est connecté à travers un interrupteur électronique à une entrée (E) pour une tension continue d'alimentation (U1) et dont au moins un enroulement secondaire (21, 21') est connecté à travers un redresseur (22, 22') à une sortie (A1, A2), une entrée de commande de l'interrupteur électronique étant reliée à travers un circuit d'attaque à un dispositif de commande qui délivre des impulsions de commande, lesquelles sont en particulier modulées en durée, les impulsions de commande ayant un potentiel d'enclenchement (+$U_H$) et les intervalles entre les impulsions ayant un potentiel de blocage (−$U_H$), caractérisé en ce que l'interrupteur électronique est un transistor MOS de puissance (17) monté par son circuit source-drain en série avec l'enroulement primaire (19), dont l'électrode de grille (G) est raccordée à travers une résistance additionnelle de grille (16) au circuit d'attaque, que le circuit d'attaque contient un circuit RC précédant la résistance additionnelle de grille (16) et comportant une résistance (15) montée en série avec la résistance additionnelle de grille (16), ainsi qu'un condensateur (18) disposé en parallèle avec le montage en série du circuit grille-source du transistor MOS (17) et de la résistance additionnelle de grille (16) et qu'un circuit de décharge est disposé en parallèle avec le condensateur (18), circuit de décharge qui peut être commandé de manière qu'il soit coupé lorsque le circuit d'attaque délivre le potentiel d'enclenchement ($+U_H$) et qu'il soit enclenché lorsque le circuit d'attaque délivre le potentiel de blocage ($-U_H$).

2. Circuit convertisseur selon la revendication 1, caractérisé en ce que le circuit de décharge est formé par le circuit émetteur-collecteur d'un transistor bipolaire, en particulier avec une résistance de protection montée en série.

3. Circuit selon la revendication 1 ou 2, caractérisé en ce que la constante de temps du circuit RC (15, 18) est seulement choisi suffisamment grande pour qu'une limite préfixée de la tension inverse du redresseur (22, 22') soit respectée.

4. Circuit convertisseur selon une des revendications 1 à 3, caractérisé en ce que la résistance additionnelle de grille (16) est connectée, d'une part, à travers la résistance (15) et le circuit collecteur-émetteur monté en série avec elle d'un premier transistor (10), à une source (3) pour le potentiel d'enclenchement ($+U_H$) et, d'autre part, à travers le circuit émetteur-collecteur d'un second transistor (12), à une source pour le potentiel de blocage ($-U_H$), que le circuit de décharge, disposé en parallèle avec le condensateur (18) du circuit RC (15, 18), est formé par le circuit émetteur-collecteur du second transistor (12) et que le premier et le second transistor (10, 12) du circuit d'attaque peuvent être commandés par le dispositif de commande, de manière qu'à tout moment l'un des transistors (10) soit conducteur et l'autre (12) soit bloqué.

5. Circuit convertisseur selon une des revendications 1 à 4, caractérisé en ce que le transformateur (20) possède plusieurs enroulements de sortie (21, 21').

6. Utilisation du circuit convertisseur selon une des revendications 1 à 5 comme convertisseur à oscillateur bloqué dans un dispositif pour la télé-alimentation de circuits de transmission de messages.